# EUROPEAN PATENT SPECIFICATION

(11) **EP 1 630 466 B1**
(45) Date of publication and mention of the grant of the patent: **02.05.2012**
(21) Application number: 05016765.9
(22) Date of filing: 02.08.2005
(51) Int. Cl.: F16L 11/12, F16L 35/00, F16L 57/00, F16L 58/18, F16L 1/12

(54) **Cover for marine hose junction and marine hose line**
Abdeckung für Unterwasserschlauchverbindung und Unterwasserschlauchleitung
Enveloppe pour raccord de tuyaux sous-marins et conduite sous-marine

(30) Priority: 23.08.2004 JP 2004242456
(43) Date of publication of application: 01.03.2006
(73) Proprietor: THE YOKOHAMA RUBBER CO., LTD., Tokyo (JP)
(72) Inventor: Yazaki, Fumihiko, 2-1 Oiwake Hiratsuka-shi Kanagawa-ken (JP); Arakawa, Jun, 2-1 Oiwake Hiratsuka-shi Kanagawa-ken (JP); Shimanoe, Satoshi, 2-1 Oiwake Hiratsuka-shi Kanagawa-ken (JP); Wakabayashi, Masashi, 2-1 Oiwake Hiratsuka-shi Kanagawa-ken (JP)
(74) Representative: HOFFMANN EITLE

(56) References cited:
- GB-A- 2 353 082
- US-A- 4 102 142
- US-A- 4 103 505
- US-A- 4 909 669
- US-A- 5 941 662

## Description

### BACKGROUND OF THE INVENTION

The present invention relates to a diameter expansion cover for a junction of a marine hose line, which is disposed on the sea or in the sea and is used for transferring a fluid such as crude oil, and to a marine hose line having such a diameter expansion cover attached to a junction thereof.

More specifically, the present invention relates to a diameter expansion cover for junctions used for connecting a plurality of marine hose units which are disposed as a marine hose line on the sea or in the sea to connect a crude oil terminal or the like on the land to a huge tanker or the like on the berth, and are used for transferring and loading a fluid such as crude oil from the crude oil terminal or the like to the huge tanker or, on the contrary, for transferring the fluid from the huge tanker to the crude oil terminal on the land. The present invention also relates to a marine hose line formed of a plurality of connected marine hose units and having the diameter expansion cover attached at a junction thereof.

Specifically, in the present invention, the diameter expansion cover means a covering member used for covering a junction between marine hose units upon formation of a marine hose line by connecting the marine hose units. Moreover, as it is relevant to an operation effect of the present invention, the covering member for increasing an outside diameter (a diameter) at the junction of the marine hose units is referred to as the diameter expansion cover herein.

Furthermore, in the present invention, the marine hose line means a single long hose line formed by connecting the plurality of marine hose units in series.

Conventionally, the marine hose units used for loading the crude oil on the above-described huge tanker or the like, are configured to transfer the crude oil to the huge tanker which is tied up in the offing at a distance of several hundred meters away from a port, a quay or the like. Therefore, several tens of marine hose units are usually connected together when used.

For this reason, flange portions are attached to both ends of the marine hose units so as to effect connection between the marine hose units, and connection between the marine hose units (formation of the marine hose line) is achieved by fastening the flange portions with bolts and the like. This technology is for instance disclosed in Japanese patent application Kokai publications No. 2004 - 132522 (JP-A-20004132522), No. 2003 - 166676 (JP-A-2003166676), No. 2001 - 187986 (JP-A-2001187986), No. 2001 - 21093 (JP-A-2001021093), and No. 200 - 85684 (JP-A-2000085684), for example.

As disclosed in the drawings in these patent publications, in a normal marine hose line, a portion in the vicinity of a junction is formed into a smaller diameter as compared to an outside diameter of a hose unit body portion. In general, the outside diameter of the hose unit body portion is tapered toward each end of the marine hose unit, and the end is connected to the flange portion.

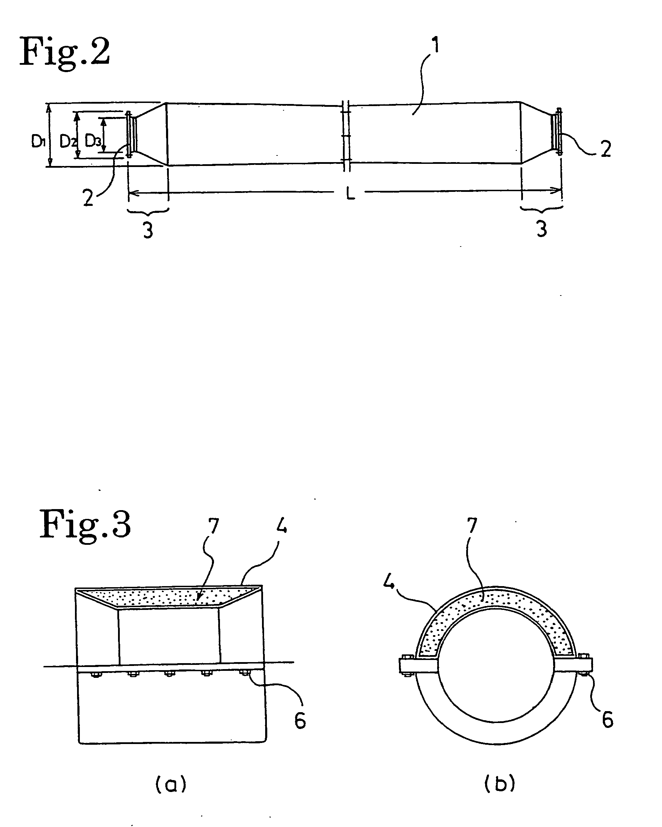

An appearance model of such a marine hose unit is shown in Fig. 2. A marine hose unit (a single unit) 1 includes connecting flanges 2 on both ends, and portions 3 in the vicinities of the both ends adopt the above-described tapered structure in which the outside diameter is gradually reduced toward the end.

In the meantime, however, the marine hose line used constantly on the sea or in the sea repeatedly receives rough and strong forces all the time such as bending forces or twisting forces attributable to waves and tides.

Accordingly, in the case of the marine hose line having the above-described aspect, sea water resistance acts on a concave portion at the junction considerably when the marine hose units are in use or towed as the marine hose line. When the marine hose units are being towed, there is a problem that a towing tool or the marine hose units themselves may be damaged or destroyed. Meanwhile, when the marine hose units are in constant use, there are problems that the resistance attributable to waves or tides acts considerably, and that an edge of a buoy, a sharp floating object or other marine structure may be caught by the concave portion at the junction, thereby causing damage or destruction of the marine hose units themselves, and so forth.

Particularly, when an object of transfer is the crude oil, occurrence of damage and destruction of the marine hose units as described above may cause leakage of the crude oil from the damaged or destroyed portion. Even a slight amount of crude oil leakage should be avoided and completely prevented in light of pollution control of the marine environment.

Nevertheless, in terms of the marine hose units disclosed in the foregoing patent publications, any investigation related to the above-described problems based on the structure in the vicinity of the concave portion at the junction has not been carried out at all as a matter of fact.

Meanwhile, there is also a case where a ship or the like sailing in the night clashes with the marine hose line used on the sea due to failure to visually check the marine hose units, thereby causing damage or destruction of the marine hose units similarly. Occurrence of such an accident should be also avoided. In this regard, there is also a marine hose configured to attach a light-emitting visible indicator onto a surface of a marine hose in order to improve visibility in the night as disclosed in Japanese patent application Kokai publications No. 2000-310364 (JP-A-2000310364), No. 11(1999) - 51250 (JP-A-11051250) and the like.

However, in this marine hose, the visible indicator also causes resistance attributable to tides and the like. Accordingly, this marine hose has problems of damage or destruction of the visible indicator and the hose, and of a difficulty to deal with such damage or destruction once it happens.

US-A-4-909 669 discloses a pipeline having welded joints between pipe sections that are provided with a (typically concrete) weight coat along their length between the welded ends. A joint protector is provided in the form of a high density plastic material across the joint region between two pipes, wrapped about the weight coats of the adjacent pipes. The annular space between the adjacent weight coats and inside the plastic material, adjacent the weld, may be filled by a high impact material.

### SUMMARY OF THE INVENTION

According to the present invention, there is provided a diameter expansion cover for a junction of a marine hose line, the junction being a connection between ends of marine hose units of the marine hose line, wherein each marine hose unit has a body portion which is tapered toward each end of the marine hose unit, which provides concave portions at the portions of the marine hose line in the vicinities of the ends of the marine hose units, and connecting flanges having smaller diameters than the outside diameter of the body portions are provided on the respective ends of the marine hose units, to effect connection between the ends of the marine hose units, the diameter expansion cover comprising: a plurality of constituent pieces each having substantially flabellate shape in terms of a cross section viewed in a direction perpendicular to an axial direction of the marine hose line, wherein the diameter expansion cover is attachable to the junction of the marine hose line and is configured to cover a circumference in the vicinity of the junction annularly, to form an outside diameter of the marine hose line in the vicinity of the tapered ends of the connected marine hose units in order to adjust an outside diameter at the concave portions to substantially the same dimension as the outside diameter (D1) of the body portions of the marine hose units.

Moreover, this diameter expansion cover preferably includes the following concrete configurations.

In one set of exemplary embodiments, there is provided the diameter expansion cover according to the foregoing, which is characterised in that the plurality of constituent pieces are integrated together by use of longitudinal flanges provided on the respective constituent pieces so as to cover the circumference annularly about said concave annulus.

Meanwhile, in another set of exemplary embodiments, there is provided the diameter expansion cover according to the foregoing one set, which is characterised in that the plurality of constituent pieces are fastened and integrated together by use of a band so as to cover the circumference annularly about said concave annulus.

Meanwhile, in still another set of exemplary embodiments, there is provided the diameter expansion cover according to the foregoing another set, which is characterised in that a constituent material of a body of the cover is resin foam.

Meanwhile, in a further set of exemplary embodiments, there is provided the diameter expansion cover according to the foregoing still another set, which is characterised in that a constituent material of a body of the cover is wood.

Meanwhile, in an even further set of exemplary embodiments, there is provided the diameter expansion cover according to the foregoing further set, which is characterised in that a light-emitting indicator is attached onto a surface.

Of course, the diameter expansion cover of the present invention may represent a combination of a plurality of the above-described specific embodiments at the same time.

The present invention also provides a marine hose line composed of marine hose units, and comprising the diameter expansion cover of the present invention or of the foregoing specific embodiments circumferentially attached at a junction of two marine hose units.

By using the diameter expansion cover according to the present invention, it is possible to provide a previously unavailable novel diameter expansion cover, which can solve the problems attributable to existence of the concave portions at the junctions on the both ends of the marine hose units.

Moreover, by using the novel diameter expansion cover, it is possible to provide a marine hose line, which can solve the problems attributable to existence of the concave portions at the junctions on the both ends of the marine hose units.

### BRIEF DESCRIPTION OF THE DRAWINGS

To enable a better understanding of the present invention, and to show how the same may be carried into effect, reference will now be made, by way of example only, to the accompanying drawings, in which:-
Fig. 1 is a schematic model cross-sectional view showing a model of a marine hose line applying one embodiment of a diameter expansion cover according to the present invention;
Fig. 2 is a schematic model front view showing an appearance model of a marine hose unit (a single unit); and
Fig. 3(a) is a schematic frontal cross-sectional model view and Fig. 3(b) is a schematic side cross-sectional model view showing an embodiment of the diameter expansion cover according to the present invention.

### EXPLANATION OF REFERENCE NUMERALS

- 1: Marine hose unit
- 2: Connecting flange
- 3: Portions in the vicinities of both ends of marine hose unit
- 4: Diameter expansion cover
- 5: Band
- 6: Bolt
- 7: Resin foam

- 11: Marine hose unit (No. 1)
- 12 :: Marine hose unit (No. 2)
- 13 :: Marine hose unit (No. 3)
- 14 :: Marine hose unit (No. 4)

### DETAILED DESCRIPTION

Now, exemplary embodiments of a diameter expansion cover according to the present invention, and a marine hose line using the diameter expansion cover will be described further in detail.

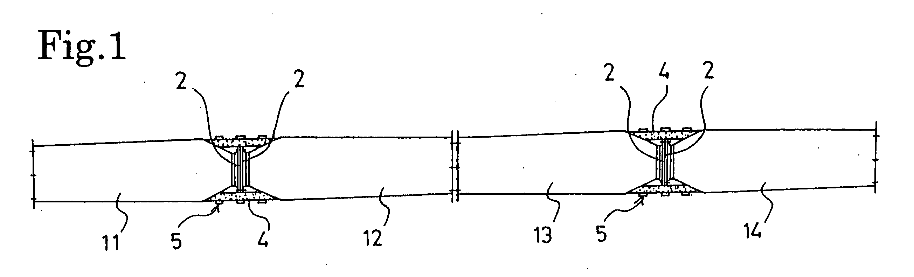

The disclosed diameter expansion cover is a previously unavailable novel member which can be used as a cover for a marine hose junction, which provides the concave portions at the portions 3 in the vicinities of the both ends of the marine hose unit shown in Fig. 2 with an annular diameter expansion cover 4 used to bury the concave portions as illustrated in Fig. 1.

The diameter expansion cover is to be attached to a junction of a marine hose line, and is configured to form an outside diameter of a body portion of the marine hose line in the vicinity of an end of the marine hose unit into a tapered shape toward the end of the marine hose unit and configured to effect connection between the ends of the marine hose units by connecting flanges provided on the respective ends of the marine hose units, and is used to cover a circumference in the vicinity of the junction annularly in order to reduce a difference between an outside diameter dimension in the vicinity of the tapered end of the marine hose units in the vicinity of the junction and an outside diameter dimension of the body portion of the marine hose units.

Fig. 1 is a schematic model cross-sectional view showing a model of part of a marine hose line formed by marine hose units, which are connected by use of a diameter expansion cover 4 according to the present invention. In the drawing, reference numerals 11 to 14 denote marine hose units (No. 1 to 4). Here, the marine hose units having the configuration as shown in Fig. 2 are connected by use of connecting flanges, thereby constituting the marine hose line.

Although concave portions are formed in the vicinities of respective junctions, the diameter expansion cover 4 is fitted to each of the concave portions. To be more precise, the diameter expansion cover 4 is fastened by bands 5, for example, so as to reside annularly on a circumference of the junction of the marine hose units. In this way, an outside diameter at the above-described concave portion is adjusted to almost the same dimension as an outside diameter of a body portion of the marine hose units.

As a result, various problems attributable to existence of the concave portion including reception of resistance in the course of towing or using the marine hose line, objects which are caught by the concave portion, and the like are substantially solved.

It is intended that the diameter expansion cover is used to cover the circumference in the vicinity of the junction substantially annularly in order to reduce a difference between an outside diameter dimension in the vicinity of the tapered end of the marine hose in the vicinity of the junction and an outside diameter dimension of the body portion of the marine hose. However, besides the function and the effect to reduce the difference in the dimensions of the outside diameters, it is also possible to impart other functions to the diameter expansion cover. For example, it is also possible to provide a function to supplementarily reinforce strength of the junction.

Although Fig. 1 shows an example of fixing the diameter expansion cover by use of the bands, it is also possible to configure the diameter expansion cover, which is used to cover the junction annularly in terms of a longitudinal direction of the hose, to include a plurality of constituent pieces each having substantially flabellate shape in terms of a cross section perpendicular to an axial direction of the hose as shown in Figs 3(a) and 3(b). Moreover, in this case, it is also possible to provide bonding surfaces (longitudinal flanges) extending in the direction of the longitudinal axis of the hose line, so that the constituent pieces are engaged and fastened together by use of bolts 6 or in accordance with an interlocking method and the like, and are thereby fixed to the concave portion. Figs. 3(a) and 3(b) show an example of applying two constituent pieces, each of which is formed into a fan shape having a pivot angle of 180°. Here, Fig. 3(a) is a schematic frontal cross-sectional model view and Fig. 3(b) is a schematic side cross-sectional model view.

It is preferable and practical to render the diameter expansion cover for a marine hose junction as lightweight as possible. When the diameter expansion cover is too heavy, the diameter expansion cover will require careful handling because provision of the cover may incur damage on the marine hose line by contraries.

Accordingly, in light of minimizing the weight, it is preferable to use resin foam or wood as a constituent material of a body of the cover.

For example, a cavity is formed inside the cover 4 in the disclosed example of the diameter expansion cover illustrated in Figs. 3(a) and 3(b). Here, the cavity may be used as a hollow portion, or alternatively, resin foam 7 may be filled in the cavity.

Moreover, a light-emitting indicator may be attached onto a surface of the diameter expansion cover, so that it is possible to visually check existence of the marine hose line easily in the nighttime.

A marine hose line formed by using the diameter expansion covers attaching the light-emitting indicators on the surface is provided with the light-emitting indicators at a constant pitch on the marine hose line. Accordingly, it is possible to visually check existence of the marine hose line easily on the dark sea. As for the light-emitting indicator, it is possible to use an indicator applying a solar battery, an indicator of a photoluminescent type, and the like. The indicator may be of a continuous lighting type or of a blink type.

Dimensions of the diameter expansion cover are not particularly limited. However, as shown in Fig. 2, it is possible to obtain a particularly favorable effect by setting a length L of the marine hose unit in a range from about 5 m to several tens of meters, a diameter D₁ of the hose unit body in a range from about 500 mm to 1500 mm on an average, a diameter D₂ of the flanges in a range from about 400 mm to 600 mm, and a diameter D₃ of a hole at the junction in a range from about 300 mm to 500 mm.

The diameter expansion cover for a marine hose junction only needs to be used to obtain the effect of reducing the difference between the outside diameter dimension in the vicinity of the tapered ends of the marine hose units in the vicinity of the junction and the outside diameter dimension of the body portions of the marine hose units. In other words, it is not always necessary to attach the diameter expansion cover to eliminate the difference. The maximum dimensions of the diameter expansion cover should be determined in consideration of the weight of the diameter expansion cover as well.

Meanwhile, in the disclosed embodiment, the diameter expansion cover is used to annularly cover the circumference in the vicinity of the junction. However, it is not always necessary to cover the circumference completely annularly. In other words, the diameter expansion cover may include a notch.

As shown in Fig. 1 and Fig. 2, the flanges typically have smaller diameters than the outside diameter of the hose. However, although not falling within the scope of the present claims, some flanges may have equal or larger diameters. In that case, it is by all means possible to divide the diameter expansion cover at the position of the flange in the direction of the longitudinal axis of the hose line, and to attach the divided pieces of the diameter expansion cover separately. It is satisfactory as long as the above-described concave portions existing at the ends of the hose units are effectively covered with the diameter expansion cover.

In consideration of the foregoing description, an advantage obtainable with the present invention is to provide a previously unavailable novel structure capable of solving problems attributable to the existence of concave portions at junctions on both ends of a marine hose unit. Another advantage obtainable with the present invention is to provide a diameter expansion cover applying the novel structure, which is capable of providing a marine hose line that solves the problems caused by the existence of the concave portions at the junctions on the both ends of the marine hose units, and to provide a marine hose line also capable of solving the problems.

## Claims

1. A diameter expansion cover (4) for a junction of a marine hose line, the junction being a connection between ends of marine hose units (1, 11, 12, 13, 14) of the marine hose line, wherein each marine hose unit has a body portion which is tapered toward each end of the marine hose unit, which provides concave portions at the portions of the marine hose line in the vicinities of the ends of the marine hose units (3), and connecting flanges (2) having smaller diameters than the outside diameter of the body portions are provided on the respective ends of the marine hose units, to effect connection between the ends of the marine hose units, the diameter expansion cover comprising:
a plurality of constituent pieces each having substantially flabellate shape in terms of a cross section viewed in a direction perpendicular to an axial direction of the marine hose line, wherein
the diameter expansion cover is attachable to the junction of the marine hose line and is configured to cover a circumference in the vicinity of the junction annularly, to form an outside diameter of the marine hose line in the vicinity of the tapered ends of the connected marine hose units in order to adjust an outside diameter at the concave portions to substantially the same dimension as the outside diameter (D1) of the body portions of the marine hose units.

2. The diameter expansion cover according to claim 1,
**characterized in that** the plurality of constituent pieces are integrated together by use of longitudinal flanges provided on the respective constituent pieces so as to cover the circumference in the vicinity of the junction annularly.

3. The diameter expansion cover according to claim 1,
**characterized in that** the plurality of constituent pieces are fastened and integrated together by use of a band (5) so as to cover the circumference in the vicinity of the junction annularly.

4. The diameter expansion cover according to any one of claims 1 to 3,
**characterized in that** a constituent material of a body of the cover is resin foam (7).

5. The diameter expansion cover according to any one of claims 1 to 3,
**characterized in that** a constituent material of a body of the cover is wood.

6. The diameter expansion cover according to any one of claims 1 to 5,
**characterized in that** a light-emitting indicator is attached onto a surface.

7. A marine hose line comprising,
the diameter expansion cover (4) according to any one of claims 1 to 6 attached to a junction of the marine hose line to cover a circumference in the vicinity of the junction annularly.

## Patentansprüche

1. Durchmesservergrößerungsabdeckung (4) für eine Schnittstelle einer Unterwasserschlauchleitung, wobei die Schnittstelle ein Anschluss zwischen Enden von Unterwasserschlaucheinheiten (1, 11, 12, 13, 14) der Unterwasserschlauchleitung ist, wobei jede Unterwasserschlaucheinheit einen Körperabschnitt aufweist, der zu jedem Ende der Unterwasserschlaucheinheit hin angefast ist, der konkave Abschnitte bei den Abschnitten der Unterwasserschlauchleitung in der Nachbarschaft der Enden der Unterwasserschlaucheinheiten (3) bereitstellt, und wobei Anschlussflansche (2) mit kleineren Durchmessern als der Außendurchmesser der Körperabschnitte an den jeweiligen Enden der Unterwasserschlaucheinheiten vorgesehen sind, um einen Anschluss zwischen den Enden der Unterwasserschlaucheinheiten durchzuführen, die Durchmesservergrößerungsabdeckung mit:
mehreren Bestandteilen, die jeweils eine im Wesentlichen fächerartige Form im Hinblick auf einen Querschnitt aufweisen, der in einer Richtung senkrecht zu einer Axialrichtung der Unterwasserschlauchleitung betrachtet wird, wobei
die Durchmesservergrößerungsabdeckung auf die Schnittstelle der Unterwasserschlauchleitung anbringbar ist und dafür konfiguriert ist, einen Umfang in der Nachbarschaft der Schnittstelle ringförmig abzudecken, um einen Außendurchmesser der Unterwasserschlauchleitung in der Nachbarschaft der angefasten Enden der angeschlossenen Unterwasserschlaucheinheiten zu bilden, um einen Außendurchmesser bei den konkaven Abschnitten auf im Wesentlichen die gleiche Abmessung wie der Außendurchmesser (D1) der Körperabschnitte der Unterwasserschlaucheinheiten anzupassen.

2. Durchmesservergrößerungsabdeckung nach Anspruch 1,
**dadurch gekennzeichnet, dass** die mehreren Bestandteile miteinander durch Längsflansche integriert werden, die auf den jeweiligen Bestandteilen so vorgesehen sind, dass sie den Umfang in der Nachbarschaft der Schnittstelle ringförmig abdecken.

3. Durchmesservergrößerungsabdeckung nach Anspruch 1,
**dadurch gekennzeichnet, dass** die mehreren Bestandteile unter Benutzung eines Bandes (5) befestigt und miteinander integriert werden, um somit den Umfang in der Nachbarschaft der Schnittstelle ringförmig abzudecken.

4. Durchmesservergrößerungsabdeckung nach einem der Ansprüche 1 bis 3,
**dadurch gekennzeichnet, dass** ein Werkstoff eines Körpers der Abdeckung ein Harzschaum (7) ist.

5. Durchmesservergrößerungsabdeckung nach einem der Ansprüche 1 bis 3,
**dadurch gekennzeichnet, dass** ein Werkstoff eines Körpers der Abdeckung Holz ist.

6. Durchmesservergrößerungsabdeckung nach einem der Ansprüche 1 bis 5,
**dadurch gekennzeichnet, dass** ein Licht aussendender Anzeiger an einer Oberfläche befestigt ist.

7. Unterwasserschlauchleitung mit
der Durchmesservergrößerungsabdeckung (4) nach einem der Ansprüche 1 bis 6, die an einer Schnittstelle der Unterwasserschlauchleitung befestigt ist, um einen Umfang in der Nachbarschaft der Verbindung ringförmig abzudecken.

## Revendications

1. Couvercle d'expansion de diamètre (4) pour une jonction d'une canalisation marine, la jonction étant un raccord entre des extrémités d'unités de tuyau marin (1, 11, 12, 13, 14) de la canalisation marine, dans lequel chaque unité de tuyau marin a une partie formant corps qui est tronconique vers chaque extrémité de l'unité de tuyau marin, qui donne des parties concaves au niveau des parties de la canalisation marine aux alentours des extrémités des unités de tuyau marin (3), et des brides de raccordement (2) ayant des diamètres plus petits que le diamètre extérieur des parties formant corps sont prévues sur les extrémités respectives des unités de tuyau marin, pour effectuer un raccordement entre les extrémités des unités de tuyau marin, le couvercle d'expansion de diamètre comprenant :
une pluralité de pièces constitutives, chacune ayant substantiellement une forme d'éventail en termes de section transversale vue dans une direction perpendiculaire à une direction axiale de la canalisation marine, dans lequel
le couvercle d'expansion de diamètre peut être attaché à la jonction de la canalisation marine et est configuré pour couvrir une circonférence au voisinage de la jonction de manière annulaire, pour former un diamètre extérieur de la ligne de canalisation marine au voisinage des extrémités tronconiques des unités de tuyau marin raccordées de façon à ajuster un diamètre extérieur au niveau des parties concaves à substantiellement la même dimension que le diamètre extérieur (D1) des parties formant corps des unités de tuyau marin.

2. Couvercle d'expansion de diamètre selon la revendication 1,
**caractérisé en ce que** la pluralité de pièces constitutives sont intégrées ensemble par utilisation de brides longitudinales prévues sur les pièces constitutives respectives de façon à couvrir la circonférence au voisinage de la jonction de manière annulaire.

3. Couvercle d'expansion de diamètre selon la revendication 1,
**caractérisé en ce que** la pluralité de pièces constitutives sont attachées et intégrées ensemble par utilisation d'une bande (5) de façon à couvrir la circonférence au voisinage de la jonction de manière annulaire.

4. Couvercle d'expansion de diamètre selon l'une quelconque des revendications 1 à 3,
**caractérisé en ce qu'**une matière constitutive d'un corps du couvercle est une mousse de résine (7).

5. Couvercle d'expansion de diamètre selon l'une quelconque des revendications 1 à 3,
**caractérisé en ce qu'**une matière constitutive d'un corps du couvercle est du bois.

6. Couvercle d'expansion de diamètre selon l'une quelconque des revendications 1 à 5,
**caractérisé en ce qu'**un indicateur électroluminescent est attaché sur une surface.

7. Canalisation marine comprenant,
le couvercle d'expansion de diamètre (4) selon l'une quelconque des revendications 1 à 6, fixé à une jonction de la canalisation marine pour couvrir une circonférence au voisinage de la jonction de manière annulaire.
